(19) **Europäisches Patentamt / European Patent Office / Office européen des brevets**

(11) **EP 4 696 532 A1**

(12) **EUROPEAN PATENT APPLICATION**
published in accordance with Art. 153(4) EPC

(43) Date of publication:
**18.02.2026 Bulletin 2026/08**

(21) Application number: **25744517.1**

(22) Date of filing: **16.01.2025**

(51) International Patent Classification (IPC):
**B60H 1/32** (2006.01)

(52) Cooperative Patent Classification (CPC):
**B60H 1/32**

(86) International application number:
**PCT/CN2025/072877**

(87) International publication number:
**WO 2025/157075 (31.07.2025 Gazette 2025/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.01.2024 CN 202410099534**

(71) Applicant: **Chongqing Changan Technology Co.,
Ltd.
Chongqing 401135 (CN)**

(72) Inventor: **CHEN, Xingfu
Chongqing 401133 (CN)**

(74) Representative: **Elzaburu S.L.P.
Edificio Torre de Cristal
Paseo de la Castellana 259 C, planta 28
28046 Madrid (ES)**

(54) **COMPRESSOR CONTROL METHOD AND APPARATUS, DEVICE AND STORAGE MEDIUM**

(57) A compressor control method and apparatus, a device and a storage medium are provided. The method includes: acquiring a refrigeration demand of an evaporator, determining a first compressor rotational speed based on the refrigeration demand, acquiring evaporation temperature error data of the evaporator, determining a second compressor rotational speed based on the evaporation temperature error data, calculating a target compressor rotational speed according to the first compressor rotational speed and the second compressor rotational speed, and controlling a compressor based on the target compressor rotational speed. The control method enables rotational speed of compressor to be closer to a rotational speed required by an actual refrigeration demand and effectively reduces errors, allowing air conditioning system to exert optimal performance.

Acquiring a refrigeration demand of an evaporator — 101

Determining a first compressor rotational speed based on the refrigeration demand — 102

Acquiring evaporation temperature error data of the evaporator — 103

Determining a second compressor rotational speed based on the evaporation temperature error data — 104

Determining a target compressor rotational speed according to the first compressor rotational speed and the second compressor rotational speed — 105

Controlling a compressor based on the target compressor rotational speed — 106

FIG. 1

## EP 4 696 532 A1

### Description

This application claims priority to Chinese Patent Application No. 202410099534.8, filed with the China National Intellectual Property Administration on January 22, 2024 and entitled "COMPRESSOR CONTROL METHOD AND APPARATUS, DEVICE AND STORAGE MEDIUM", which is incorporated herein by reference in its entirety.

### TECHNICAL FIELD

The present application relates to the technical field of air conditioning device, in particular, to a compressor control method and apparatus, a device and a storage medium.

### BACKGROUND

In an automobile system, an automobile air conditioner is a major energy-consuming unit. Particularly in an electric vehicle system, due to limited capacity of a battery, the driving range of a vehicle is restricted. With the popularization of new energy vehicles, how to make automobile air conditioners more energy-efficient to increase the driving range of the vehicle has become an urgent problem to be solved in the industry.

Specifically, in an air conditioning system of an electric vehicle, the system adjusts a rotational speed of a compressor to control a flow rate of a refrigerant in the system. The higher the rotational speed of the compressor, the faster the circulation of the refrigerant in the system, and the stronger the refrigeration capacity. In actual operating environments, because of being affected by various factors (such as temperature, air pressure, etc.), operating conditions of the compressor vary within a wide range. Therefore, controlling the rotational speed of the compressor in a reasonable manner to meet an actual refrigeration demand and avoid unnecessary energy consumption is the key to achieving energy efficiency of the system.

Existing control methods for the rotational speed of the compressor of the air conditioning do not fully consider various factors affecting the rotational speed of the compressor, resulting in large control errors.

### SUMMARY

**In** view of the above problems, a compressor control method and apparatus, a device and a storage medium that overcome the above problems or at least partially solve the above problems are provided.

A compressor control method is provided, including:

acquiring a refrigeration demand of an evaporator;
determining a first compressor rotational speed based on the refrigeration demand;
acquiring evaporation temperature error data of the evaporator;
determining a second compressor rotational speed based on the evaporation temperature error data;
determining a target compressor rotational speed according to the first compressor rotational speed and the second compressor rotational speed; and
controlling a compressor based on the target compressor rotational speed.

Optionally, before the step of acquiring the refrigeration demand of the evaporator, the method includes:

acquiring an air intake volume at an air inlet of the evaporator;
acquiring an enthalpy difference between an air outlet and the air inlet of the evaporator; and
determining the refrigeration demand of the evaporator according to the air intake volume and the enthalpy difference.

Optionally, the step of determining the first compressor rotational speed based on the refrigeration demand includes:

acquiring a first corresponding relationship between the refrigeration demand and the first compressor rotational speed; and
determining the first compressor rotational speed according to the refrigeration demand and the first corresponding relationship.

Optionally, the evaporation temperature error data includes a first evaporation temperature error at a current moment and a second evaporation temperature error at a previous moment. The step of determining the second compressor rotational speed based on the evaporation temperature error data includes:

acquiring a correlation coefficient corresponding to the first evaporation temperature error; and
determining the second compressor rotational speed according to the first evaporation temperature error, the second evaporation temperature error, and the correlation coefficient corresponding to the first evaporation temperature error.

Optionally, before the step of acquiring the air intake volume at the air inlet of the evaporator, the method includes:

acquiring a second corresponding relationship between an operating voltage of a blower and the air intake volume at the air inlet of the evaporator;
acquiring a target operating voltage of the blower; and
determining the air intake volume at the air inlet of the evaporator according to the target operating voltage of the blower and the second corresponding relationship.

Optionally, before the step of acquiring the evaporation temperature error data of the evaporator, the method includes:

acquiring an actual air outlet temperature and a target air outlet temperature of the evaporator; and
determining the evaporation temperature error data according to the actual air outlet temperature and the target air outlet temperature of the evaporator.

Optionally, the step of determining the target compressor rotational speed according to the first compressor rotational speed and the second compressor rotational speed includes:
summing the first compressor rotational speed and the second compressor rotational speed to determine the target compressor rotational speed.

A compressor control apparatus is provided, including:

a refrigeration capacity acquisition module, configured to acquire a refrigeration demand of an evaporator;
a first compressor rotational speed determination module, configured to determine a first compressor rotational speed based on the refrigeration demand;
an evaporation temperature error data acquisition module, configured to acquire evaporation temperature error data of the evaporator;
a second compressor rotational speed determination module, configured to determine a second compressor rotational speed based on the evaporation temperature error data;
a target compressor rotational speed determination module, configured to determine a target compressor rotational speed according to the first compressor rotational speed and the second compressor rotational speed; and
a compressor control module, configured to control a compressor based on the target compressor rotational speed.

An electronic device is provided, including: a processor, a memory, and a computer program stored in the memory and executable on the processor. When the computer program is executed by the processor, the compressor control method according to any one of the above is implemented.
A computer-readable storage medium is provided, on which a computer program is stored. When the computer program is executed by a processor, the compressor control method according to any one of the above is implemented.
A computer program is provided, when the computer program is executed by a processor, the compressor control method according to any one of the above is implemented.
A computer program product is provided, including a computer program, and when the computer program is executed by a processor, the compressor control method according to any one of the above is implemented.
The present application acquires the refrigeration demand of the evaporator, determines the first compressor rotational speed based on the refrigeration demand, acquires the evaporation temperature error data of the evaporator, determines the second compressor rotational speed based on the evaporation temperature error data, calculates the target compressor rotational speed according to the first compressor rotational speed and the second compressor rotational speed, and controls the compressor based on the target compressor rotational speed. Through the above method, the rotational speed of the compressor can be enabled to be closer to a rotational speed required by an actual refrigeration demand and effectively reduces errors, allowing air conditioning system to exert optimal performance.

**BRIEF DESCRIPTION OF DRAWINGS**

In order to more clearly illustrate the technical solutions in the present application or the prior art, the drawings required for describing the embodiments or the prior art will be briefly introduced below. Obviously, the drawings in the following description are some embodiments of the present application. For those of ordinary skill in the art, other drawings can also be obtained based on these drawings without creative work.

FIG. 1 is a flowchart of steps of a compressor control method provided in an embodiment of the present application.
FIG. 2 is a schematic diagram of part of composition of an air conditioning system provided in an embodiment of the present application.
FIG. 3 is a flowchart of cyclic control of a compressor provided in an embodiment of the present application.
FIG. 4 is a structural block diagram of a compressor control apparatus provided in an embodiment of the present application.

## DESCRIPTION OF EMBODIMENTS

In order to make the above objectives, features, and advantages of the present application more clearly understood, the present application will be further described in detail below with reference to the accompanying drawings and specific embodiments. Obviously, the described embodiments are part of the embodiments of the present application, rather than all of them. Based on the embodiments in the present application, all other embodiments obtained by those of ordinary skill in the art without creative work fall within the protection scope of the present application.

In an automobile system, an automobile air conditioner is a major energy-consuming unit. Particularly in an electric vehicle system, due to limited capacity of a battery, the driving range of a vehicle is restricted. With the popularization of new energy vehicles, how to make automobile air conditioners more energy-efficient to increase the driving range of the vehicle has become an urgent problem to be solved in the industry.

Specifically, in an air conditioning system of an electric vehicle, the system adjusts a rotational speed of a compressor to control a flow rate of a refrigerant in the system. The higher the rotational speed of the compressor, the faster the circulation of the refrigerant in the system, and the stronger the refrigeration capacity. In actual operating environments, because of being affected by various factors (such as temperature, air pressure, etc.), operating conditions of the compressor vary within a wide range. Therefore, controlling the rotational speed of the compressor in a reasonable manner to meet an actual refrigeration demand and avoid unnecessary energy consumption is the key to achieving energy efficiency of the system.

One of the core ideas of the embodiments of the present application is to determine a rotational speed of feedforward control of a compressor based on a refrigeration demand of an evaporator in an automobile air conditioning system and determine a rotational speed of feedback control of the compressor based on temperature error data of the evaporator.

Feedforward control refers to a control strategy adopted before an output is affected by disturbance factors; feedback control refers to a corrected control strategy adopted after the output is affected by disturbance factors, so it is also called feedback compensation control.

By combining the rotational speed of the feedforward control and the rotational speed of the feedback control, the embodiments of the present application determine a target control rotational speed of the compressor during actual operation, which can enable the control rotational speed of the compressor in the air conditioning system to be closer to a rotational speed required by an actual refrigeration demand, thereby making it more energy-efficient. Especially for electric vehicles, saving the energy consumption of the air conditioning system can significantly improve the driving range of electric vehicles.

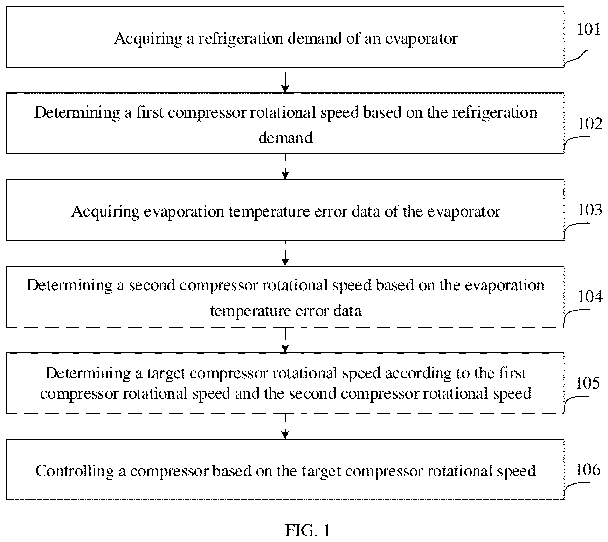

With reference to FIG. 1, which shows a flowchart of steps of a compressor control method provided in an embodiment of the present application, the method may specifically include the following steps.

Step 101, acquiring a refrigeration demand of an evaporator.

The refrigeration demand of the evaporator refers to a total amount of heat that the evaporator needs to remove from a closed space or area per unit time, and its unit is generally W (watt).

In some embodiments of the present application, before step 101, the method further includes:
step 11, acquiring an air intake volume at an air inlet of the evaporator.

In some embodiments of the present application, before the step of acquiring the air intake volume at the air inlet of the evaporator, the method further includes:
step 1001, acquiring a second corresponding relationship between an operating voltage of a blower and the air intake volume at the air inlet of the evaporator.

The blower is responsible for blowing cold/hot air generated by the evaporator out of an air outlet of an air conditioner. The higher the operating voltage of the blower, the higher the output power, and the greater the air intake volume at the air inlet of the evaporator.

In practical applications, the air conditioning system can be tested in advance. By controlling the blower to operate at different operating voltages, the air intake volume at the air inlet of the evaporator is detected, and a second corresponding relationship table between the operating voltage of the blower and the air intake volume at the air inlet of the evaporator is established to represent the second corresponding relationship. The corresponding relationship table can be as shown in Table 1:

Table 1

| Operating voltage of the blower (V) | Air intake volume (kg/m$^3$) |
| --- | --- |
| 4V | 178.4 |
| 5V | 236.0 |
| 6V | 291.2 |
| 7V | 344.0 |
| 8V | 394.3 |
| 9V | 442.3 |
| 10V | 487.9 |
| 11V | 531.1 |
| 12V | 571.9 |

Step 1002, acquiring a target operating voltage of the blower.

The target operating voltage of the blower refers to an operating voltage of the blower at a current moment when the air conditioning system is operating normally.

Step 1003, determining the air intake volume at the air inlet of the evaporator according to the target operating voltage of the blower and the second corresponding relationship.

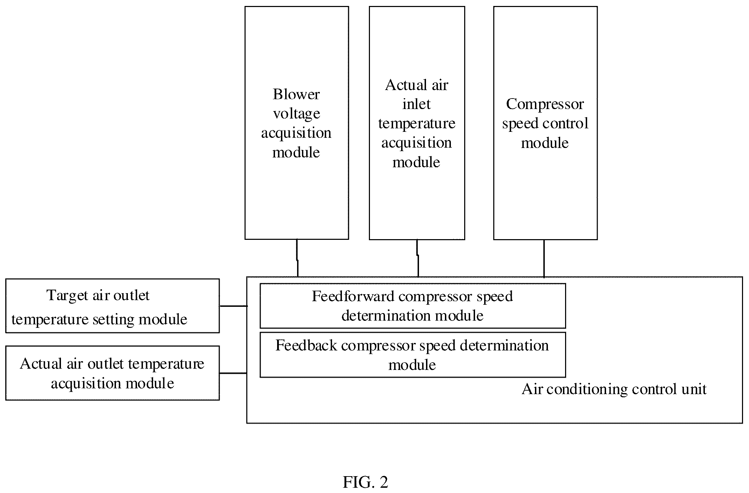

In practical applications, when actually controlling the rotational speed of the compressor, as shown in FIG. 2, a blower voltage acquisition module can detect the target operating voltage of the blower and feed it back to an air conditioning control unit. The air conditioning control unit searches for the target operating voltage in a pre-established second corresponding relationship table as shown in Table 1, so as to determine the air intake volume at the air inlet of the evaporator. If there is no exactly matching target operating voltage in the second corresponding relationship table, two operating voltages adjacent to the target operating voltage and corresponding air intake volume data can be found, and the air intake volume corresponding to the target operating voltage can be determined based on a linear interpolation method. For example, if the target operating voltage is 5.5V and there is no exactly matching data in the second corresponding relationship as shown in Table 1, an adjacent operating voltage of 5V and a corresponding air intake volume of 236 kg/m$^3$ as well as an adjacent operating voltage of 6V and a corresponding air intake volume of 291.2 kg/m$^3$ are found, and an air intake volume corresponding to the operating voltage of 5.5V is determined based on the linear interpolation method.

Step 12: acquiring an enthalpy difference between an air outlet and the air inlet of the evaporator.

The enthalpy difference between the air outlet and the air inlet of the evaporator represents heat absorbed or released by the evaporator.

In practical applications, the enthalpy difference between the air outlet and the air inlet of the evaporator is denoted as $\Delta$H, which can be determined by the following formula:

$$\Delta H = CP \times \Delta T$$

where CP is a specific heat capacity of air, which is generally a fixed value of 1.005 KJ/(Kg*K), and $\Delta T$ is a temperature difference between the air outlet and the air inlet of the evaporator.

In practical applications, as shown in FIG. 2, an actual air outlet temperature acquisition module can collect the temperature at the air outlet of the evaporator, an actual air inlet temperature acquisition module can collect a temperature at the air inlet of the evaporator, and fed relevant temperature data back to the air conditioning control unit.

Step 13, determining the refrigeration demand of the evaporator according to the air intake volume and the enthalpy difference.

In practical applications, the refrigeration demand of the evaporator is denoted as $Q_{eva}$, and the air intake volume at the air inlet of the evaporator is denoted as M. The refrigeration demand $Q_{eva}$ of the evaporator can be determined by the following formula:

$$Q_{eva} = M \times \Delta H$$

Step 102, determining a first compressor rotational speed based on the refrigeration demand.

The rotational speed of the compressor refers to the number of rotations of the compressor rotor per minute, and its unit is generally rpm/min (revolutions per minute). The highness or lowness of the rotational speed directly affects the working efficiency and energy consumption of the compressor. Generally speaking, the higher the rotational speed, the higher the working efficiency of the compressor, the stronger the refrigeration effect, but the energy consumption also increases accordingly. On the contrary, the lower the rotational speed, the lower the working efficiency and energy consumption.

In the embodiment of the present application, the first compressor rotational speed is a rotational speed of feedforward control of the compressor, which mainly considers the influence of the operating mode of the evaporator itself.

In practical applications, as shown in FIG. 2, a feedforward compressor determination module mounted on the air conditioning control unit can execute a business logic related to determination of the first compressor rotational speed.

In some embodiments of the present application, step 102 further includes:

sub-step 121, acquiring a first corresponding relationship between the refrigeration demand and the first compressor rotational speed.

In practical applications, according to different refrigeration demands of the evaporator, the air conditioning system can be tested in advance under a standard test condition to obtain the first compressor rotational speeds corresponding to different refrigeration demands of the evaporator, and establish a corresponding relationship table between the refrigeration demand and the first compressor rotational speed to represent the first corresponding relationship. The corresponding relationship table can be as shown in Table 2:

Table 2

| Refrigeration demand (W) | First compressor rotational speed (rpm/min) |
|---|---|
| 500 | 800 |
| 1000 | 1000 |
| 1500 | 1500 |
| 2000 | 2000 |
| 2500 | 2500 |
| 3000 | 3000 |
| 3500 | 3500 |
| 4000 | 4000 |
| 4500 | 4500 |
| 5000 | 5000 |
| 5500 | 6000 |
| 6000 | 7000 |

where the standard test condition can be set as follows: a suction pressure of the evaporator = 1.6 MPa, a discharge pressure of the evaporator = 0.3 MPa, a superheat degree of the evaporator = 10 °C, and a subcooling degree of the evaporator = 5 °C.

Sub-step 122, determining the first compressor rotational speed according to the refrigeration demand and the first corresponding relationship.

In practical applications, when the rotational speed of the compressor is actually controlled, the refrigeration demand is searched in the table based on the first corresponding relationship to determine the corresponding first compressor rotational speed. If there is no exactly matching refrigeration demand in the first corresponding relationship, two refrigeration demands close to the refrigeration demand and the corresponding first compressor rotational speeds can be found, and the first compressor rotational speed can be determined based on the linear interpolation method. For example, if the refrigeration demand is 1800 and there is no exactly matching data in the first corresponding relationship as shown in Table 1, an adjacent refrigeration demand of 1500 and a corresponding first compressor rotational speed of 1500 as well as an adjacent refrigeration demand of 2000 and a corresponding first compressor rotational speed of 2000 are found, and the first compressor rotational speed corresponding to the refrigeration demand of 1800 is determined based on the linear interpolation method.

Step 103, acquiring evaporation temperature error data of the evaporator.

In some embodiments of the present application, before step 103, the method further includes:

step 31, acquiring an actual air outlet temperature and a target air outlet temperature of the evaporator; and
step 32, determining the evaporation temperature error data according to the actual air outlet temperature and the target air outlet temperature of the evaporator.

The target air outlet temperature of the evaporator refers to a set air outlet temperature when the evaporator is operating normally; the actual air outlet temperature of the evaporator refers to a detected air outlet temperature when the evaporator is operating actually. Because of being affected by factors such as the external environment or the internal system, the actual air outlet temperature generally deviates from the target air outlet temperature.

In practical applications, as shown in FIG. 2, a target air outlet temperature setting module can determine the target air outlet temperature, an actual air outlet temperature acquisition module can determine the actual air outlet temperature, and the relevant temperature data is fed back to the air conditioning control unit.

In practical applications, an evaporation temperature error is denoted as $T_{VntErr}$, the target air outlet temperature of the evaporator is denoted as $T_{VntTgt}$, and the actual air outlet temperature of the evaporator is denoted as $T_{VntAct}$. The evaporation temperature error $T_{VntErr}$ of the evaporator can be determined by the following formula:

$$T_{VntErr} = T_{VntAct} - T_{VntTgt}$$

Step 104, determining a second compressor rotational speed based on the evaporation temperature error data.

In the embodiment of the present application, the second compressor rotational speed is the rotational speed of the feedback control, which mainly considers the influence of the operating conditions of the evaporator.

In practical applications, as shown in FIG. 2, a feedback compressor determination module mounted on the air conditioning control unit can execute a business logic related to determination of the second compressor rotational speed.

In some embodiments of the present application, the evaporation temperature error data includes a first evaporation temperature error at a current moment and a second evaporation temperature error at a previous moment. Step 104 includes:

sub-step 141, acquiring a correlation coefficient corresponding to the first evaporation temperature error.

The correlation coefficient corresponding to the first evaporation temperature error may include a proportional coefficient and an integral coefficient in PID (Proportional-Integral-Derivative) control. The proportional coefficient is used to convert the value of the temperature error in a certain proportion to obtain a compensated compressor rotational speed based on proportional control. The integral coefficient is used to integrate a value of a temperature error within a unit time interval (i.e., the first temperature error at the current moment and the second temperature error at the previous moment, where the unit time interval can be in seconds) to obtain the compensated compressor rotational speed based on integral control.

In practical applications, the air conditioning system can be tested in advance to simulate the evaporation temperature errors of the evaporator under different operating conditions, and calibrate the proportional coefficient and the integral coefficient respectively to obtain the corresponding relationships between the evaporation temperature error with the proportional coefficient and the integral coefficient.

The corresponding relationship between the evaporation temperature error and the proportional coefficient can be as shown in Table 3:

Table 3

| Evaporation temperature error (°C) | Proportional coefficient |
|---|---|
| 2 | 100 |
| 4 | 115 |
| 6 | 125 |
| 10 | 135 |
| 20 | 145 |
| 30 | 150 |

The corresponding relationship between the evaporation temperature error and the integral coefficient can be as shown in Table 4:

Table 4

| Evaporation temperature error (°C) | Integral coefficient |
|---|---|
| 2 | 10 |
| 4 | 12 |
| 6 | 15 |
| 10 | 17 |
| 20 | 20 |
| 30 | 25 |

When the rotational speed of the compressor is controlled, the proportional coefficient and the integral coefficient corresponding to the first evaporation temperature error are obtained by matching a pre-established corresponding relationships between the temperature error with the proportional coefficient and the integral coefficient.

Sub-step 142, determining the second compressor rotational speed according to the first evaporation temperature error, the second evaporation temperature error, and the correlation coefficient corresponding to the first evaporation temperature error.

In practical applications, when the correlation coefficient corresponding to the first evaporation temperature error includes a proportional coefficient and an integral coefficient, the proportional coefficient is denoted as Kp, the integral coefficient is denoted as Ki, the temperature error at the current moment is denoted as $T_{VntErr0}$, and the temperature error at the previous moment is denoted as $T_{VntErr1}$. The second compressor rotational speed $N_{fb}$ can be determined by the following formula:

$$N_{fb} = Kp \times T_{VntErr0} + Ki \times (T_{VntErr0} + T_{vntErr1})$$

Step 105, determining a target compressor rotational speed according to the first compressor rotational speed and the second compressor rotational speed.

In some embodiments of the present application, step 105 includes:
summing the first compressor rotational speed and the second compressor rotational speed to determine the target compressor rotational speed.

In practical applications, the first compressor rotational speed (i.e., the rotational speed of the feedforward control) is denoted as $N_{ff}$, the second compressor rotational speed (i.e., the rotational speed of the feedback control) is denoted as $N_{fb}$, and the target compressor rotational speed $N_{tgt}$ can be determined by the following formula:

$$N_{tgt} = N_{ff} + N_{fb}$$

Step 106, controlling a compressor based on the target compressor rotational speed.

In practical applications, as shown in FIG. 2, the air conditioning control unit can feed back the target compressor rotational speed to a compressor control module, and the compressor control module controls the compressor using the target compressor rotational speed.

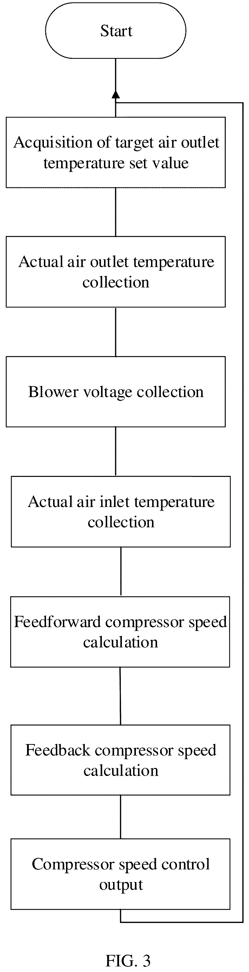

In some embodiments of the present application, as shown in FIG. 3, a control flow for the rotational speed of the compressor at a certain moment may consist of the following parts:

data collection: collecting data in sequence, where the data may include the target air outlet temperature, the actual air outlet temperature, the actual air inlet temperature, the blower operating voltage, etc.;
target compressor rotational speed calculation: calculating the first compressor rotational speed (i.e., the rotational speed of the feedforward compressor) and the second compressor rotational speed (i.e., the rotational speed of the feedback compressor) respectively based on the collected data; and obtain the target compressor rotational speed based on the first compressor rotational speed and the second compressor rotational speed; and
compressor control: controlling the compressor according to the target compressor rotational speed.

For the subsequent compressor control at each moment, the above control flow is executed cyclically.

The embodiments of the present application have the following advantages: by acquiring the refrigeration demand of the evaporator, determining the first compressor rotational speed based on the refrigeration demand, acquiring the evaporation temperature error data of the evaporator, determining the second compressor rotational speed based on the evaporation temperature error data, calculating the target compressor rotational speed according to the first compressor rotational speed and the second compressor rotational speed, and controlling the compressor based on the target compressor rotational speed, the rotational speed of the compressor can be enabled to be closer to a rotational speed required by an actual refrigeration demand and effectively reduces errors, allowing air conditioning system to exert optimal performance.

It should be noted that, for the method embodiments, for the sake of simple description, they are all expressed as a series of action combinations. However, those skilled in the art should know that the embodiments of the present application are not limited by the described sequence of actions, because according to the embodiments of the present application, some steps can be performed in other sequences or simultaneously. Secondly, those skilled in the art should also know that the embodiments described in the specification are all preferred embodiments, and the actions involved are not necessarily required by the embodiments of the present application.

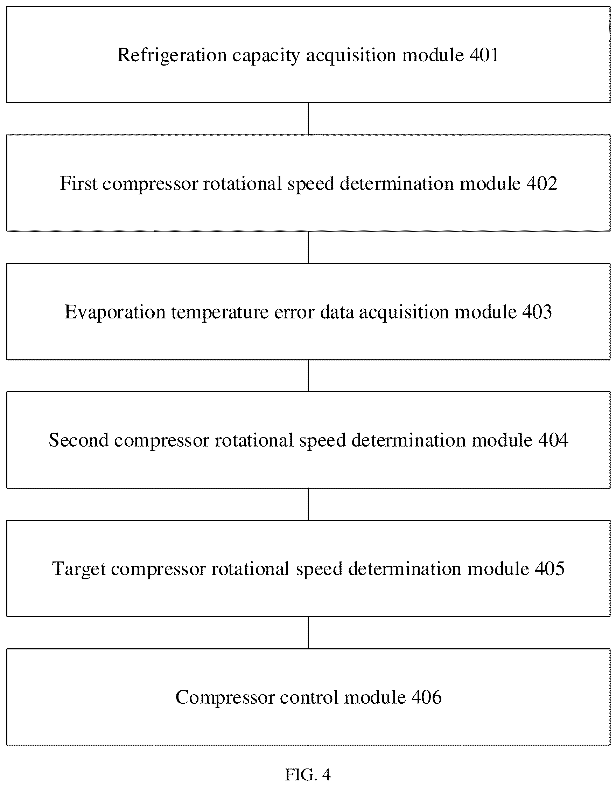

With reference to FIG. 4, which shows a structural schematic diagram of a compressor control apparatus provided in an embodiment of the present application, the apparatus may specifically include the following modules:

> a refrigeration capacity acquisition module 401, configured to acquire a refrigeration demand of an evaporator;
> a first compressor rotational speed determination module 402, configured to determine a first compressor rotational speed based on the refrigeration demand;
> an evaporation temperature error data acquisition module 403, configured to acquire evaporation temperature error data of the evaporator;
> a second compressor rotational speed determination module 404, configured to determine a second compressor rotational speed based on the evaporation temperature error data;
> a target compressor rotational speed determination module 405, configured to determine a target compressor rotational speed according to the first compressor rotational speed and the second compressor rotational speed; and
> a compressor control module 406, configured to control a compressor based on the target compressor rotational speed.

In some embodiments of the present application, the apparatus further includes:

> an air intake volume acquisition module, configured to acquire an air intake volume at an air inlet of the evaporator;
> an enthalpy difference acquisition module, configured to acquire an enthalpy difference between an air outlet and the air inlet of the evaporator; and
> a refrigeration demand determination module, configured to determine the refrigeration demand of the evaporator according to the air intake volume and the enthalpy difference.

In some embodiments of the present application, the first compressor rotational speed determination module 402 includes:

> a first corresponding relationship determination sub-module, configured to acquire a first corresponding relationship between the refrigeration demand and the first compressor rotational speed; and
> a first compressor rotational speed determination sub-module, configured to determine the first compressor rotational speed according to the refrigeration demand and the first corresponding relationship.

In some embodiments of the present application, the evaporation temperature error data includes a first evaporation temperature error at a current moment and a second evaporation temperature error at a previous moment. The second compressor rotational speed determination module 404 includes:

> a coefficient determination sub-module, configured to acquire a correlation coefficient corresponding to the first evaporation temperature error; and
> a second compressor rotational speed determination sub-module, configured to determine the second compressor rotational speed according to the first evaporation temperature error, the second evaporation temperature error, and the correlation coefficient corresponding to the first evaporation temperature error.

In some embodiments of the present application, the apparatus further includes:

> a second corresponding relationship acquisition module, configured to acquire a second corresponding relationship between an operating voltage of a blower and the air intake volume at the air inlet of the evaporator;
> a blower voltage acquisition module, configured to acquire a target operating voltage of the blower; and
> an air intake volume acquisition module, configured to determine the air intake volume at the air inlet of the evaporator according to the target operating voltage of the blower and the second corresponding relationship.

In some embodiments of the present application, the apparatus further includes:

an air outlet temperature acquisition module, configured to acquire an actual air outlet temperature and a target air outlet temperature of the evaporator; and

an evaporation temperature error data determination module, configured to determine the evaporation temperature error data according to the actual air outlet temperature and the target air outlet temperature of the evaporator.

In some embodiments of the present application, the target compressor rotational speed determination module 405 includes:

a target compressor rotational speed determination sub-module, configured to sum the first compressor rotational speed and the second compressor rotational speed to determine the target compressor rotational speed.

An embodiment of the present application further provides an electronic device, which may include a processor, a memory, and a computer program stored in the memory and executable on the processor. When the computer program is executed by the processor, the above compressor control method is implemented.

An embodiment of the present application further provides a computer-readable storage medium, on which a computer program is stored. When the computer program is executed by a processor, the above compressor control method is implemented.

As for the apparatus embodiments, since they are basically similar to the method embodiments, the description is relatively simple, and the relevant parts can be referred to the partial description of the method embodiments.

An embodiment of the present application further provides a computer program, when the computer program is executed by a processor, the compressor control method according to any one of the above is implemented.

An embodiment of the present application further provides a computer program product, which includes a computer program. When the computer program is executed by a processor, the compressor control method according to any one of the above is implemented.

It should be noted that the user information (including but not limited to user equipment information, user personal information, etc.) and data (including but not limited to data used for analysis, stored data, displayed data, etc.) involved in the present application are all information and data authorized by the user or fully authorized by all parties. The collection, use, and processing of relevant data comply with the relevant laws and regulations and standards of the relevant countries and regions, and corresponding operation entrances are provided for the user to select authorization or rejection.

The various embodiments in this specification are described in a progressive manner. Each embodiment focuses on the differences from other embodiments, and the same or similar parts between the various embodiments can be referred to each other.

Those skilled in the art should understand that the embodiments of the present application can be provided as a method, an apparatus, or a computer program product. Therefore, the embodiments of the present application can take the form of an entirely hardware embodiment, an entirely software embodiment, or an embodiment combining software and hardware. Moreover, the embodiments of the present application can take the form of a computer program product implemented on one or more computer-readable storage media (including but not limited to disk storage, CD-ROM, optical storage, etc.) containing computer-usable program codes.

The embodiments of the present application are described with reference to the flowcharts and/or block diagrams of the method, the terminal device (system), and the computer program product according to the embodiments of the present application. It should be understood that each flow and/or block in the flowchart and/or block diagram, and the combination of flows and/or blocks in the flowchart and/or block diagram can be implemented by computer program instructions. These computer program instructions can be provided to the processor of a general-purpose computer, a special-purpose computer, an embedded processor, or other programmable data processing terminal devices to generate a machine, so that the instructions executed by the processor of the computer or other programmable data processing terminal devices generate a device for realizing the functions specified in one flow or multiple flows in the flowchart and/or one block or multiple blocks in the block diagram.

These computer program instructions can also be stored in a computer-readable memory that can guide the computer or other programmable data processing terminal devices to work in a specific manner, so that the instructions stored in the computer-readable memory generate an article of manufacture including an instruction device. The instruction device realizes the functions specified in one flow or multiple flows in the flowchart and/or one block or multiple blocks in the block diagram.

These computer program instructions can also be loaded onto a computer or other programmable data processing terminal device, so that a series of operation steps are executed on the computer or other programmable terminal device to generate computer-implemented processing. Therefore, the instructions executed on the computer or other programmable terminal device provide steps for realizing the functions specified in one flow or multiple flows in the flowchart and/or one block or multiple blocks in the block diagram.

Although the preferred embodiments of the embodiments of the present application have been described, those skilled in the art can make additional changes and modifications to these embodiments once they learn the basic creative concept. Therefore, the appended claims are intended to be interpreted as including the preferred embodiments and all changes and modifications that fall within the scope of the embodiments of the present application.

Finally, it should be noted that in this document, relational terms such as first and second are only used to distinguish one entity or operation from another entity or operation, and do not necessarily require or imply that there is any such actual relationship or order between these entities or operations. Moreover, the terms "include", "comprise", or any other variant thereof are intended to cover a non-exclusive inclusion, so that a process, method, article, or terminal device including a series of elements not only includes those elements but also includes other elements not explicitly listed, or further includes elements inherent to such a process, method, article, or terminal device. Without more restrictions, the element defined by the sentence "including a..." does not exclude the existence of other identical elements in the process, method, article, or terminal device that includes the element.

The compressor control method and apparatus, the device and the storage medium provided above have been described in detail. In this paper, specific examples are used to explain the principles and implementation methods of the present application. The descriptions of the above embodiments are only used to help understand the method and the core idea of the present application. At the same time, for those of ordinary skill in the art, according to the idea of the present application, there will be changes in the specific implementation methods and application scopes. In conclusion, the content of this specification should not be understood as a limitation to the present application.

**Claims**

1. A compressor control method, comprising:

   acquiring a refrigeration demand of an evaporator;
   determining a first compressor rotational speed based on the refrigeration demand;
   acquiring evaporation temperature error data of the evaporator;
   determining a second compressor rotational speed based on the evaporation temperature error data;
   determining a target compressor rotational speed according to the first compressor rotational speed and the second compressor rotational speed; and
   controlling a compressor based on the target compressor rotational speed.

2. The method according to claim 1, wherein before the step of acquiring the refrigeration demand of the evaporator, the method comprises:

   acquiring an air intake volume at an air inlet of the evaporator;
   acquiring an enthalpy difference between an air outlet and the air inlet of the evaporator; and
   determining the refrigeration demand of the evaporator according to the air intake volume and the enthalpy difference.

3. The method according to claim 1 or 2, wherein the step of determining the first compressor rotational speed based on the refrigeration demand comprises:

   acquiring a first corresponding relationship between the refrigeration demand and the first compressor rotational speed; and
   determining the first compressor rotational speed according to the refrigeration demand and the first corresponding relationship.

4. The method according to any one of claims 1 to 3, wherein the evaporation temperature error data comprises a first evaporation temperature error at a current moment and a second evaporation temperature error at a previous moment, and the step of determining the second compressor rotational speed based on the evaporation temperature error data comprises:

   acquiring a correlation coefficient corresponding to the first evaporation temperature error; and
   determining the second compressor rotational speed according to the first evaporation temperature error, the second evaporation temperature error, and the correlation coefficient corresponding to the first evaporation temperature error.

5. The method according to claim 2, wherein before the step of acquiring the air intake volume at the air inlet of the evaporator, the method comprises:

acquiring a second corresponding relationship between an operating voltage of a blower and the air intake volume at the air inlet of the evaporator;
acquiring a target operating voltage of the blower; and
determining the air intake volume at the air inlet of the evaporator according to the target operating voltage of the blower and the second corresponding relationship.

6. The method according to any one of claims 1 to 5, wherein before the step of acquiring the evaporation temperature error data of the evaporator, the method comprises:

acquiring an actual air outlet temperature and a target air outlet temperature of the evaporator; and
determining the evaporation temperature error data according to the actual air outlet temperature and the target air outlet temperature of the evaporator.

7. The method according to any one of claims 1 to 6, wherein the step of determining the target compressor rotational speed according to the first compressor rotational speed and the second compressor rotational speed comprises: summing the first compressor rotational speed and the second compressor rotational speed to determine the target compressor rotational speed.

8. A compressor control apparatus, comprising:

a refrigeration capacity acquisition module, configured to acquire a refrigeration demand of an evaporator;
a first compressor rotational speed determination module, configured to determine a first compressor rotational speed based on the refrigeration demand;
an evaporation temperature error data acquisition module, configured to acquire evaporation temperature error data of the evaporator;
a second compressor rotational speed determination module, configured to determine a second compressor rotational speed based on the evaporation temperature error data;
a target compressor rotational speed determination module, configured to determine a target compressor rotational speed according to the first compressor rotational speed and the second compressor rotational speed; and
a compressor control module, configured to control a compressor based on the target compressor rotational speed.

9. An electronic device, comprising: a processor, a memory, and a computer program stored in the memory and executable on the processor, wherein when the computer program is executed by the processor, the compressor control method according to any one of claims 1 to 7 is implemented.

10. A computer-readable storage medium, wherein a computer program is stored on the computer-readable storage medium, when the computer program is executed by a processor, the compressor control method according to any one of claims 1 to 7 is implemented.

11. A computer program, wherein when the computer program is executed by a processor, the compressor control method according to any one of claims 1 to 7 is implemented.

12. A computer program product, comprising a computer program, and when the computer program is executed by a processor, the compressor control method according to any one of claims 1 to 7 is implemented.

| Acquiring a refrigeration demand of an evaporator | 101 |

↓

| Determining a first compressor rotational speed based on the refrigeration demand | 102 |

↓

| Acquiring evaporation temperature error data of the evaporator | 103 |

↓

| Determining a second compressor rotational speed based on the evaporation temperature error data | 104 |

↓

| Determining a target compressor rotational speed according to the first compressor rotational speed and the second compressor rotational speed | 105 |

↓

| Controlling a compressor based on the target compressor rotational speed | 106 |

FIG. 1

FIG. 2

Start

Acquisition of target air outlet
temperature set value

Actual air outlet temperature
collection

Blower voltage collection

Actual air inlet temperature
collection

Feedforward compressor speed
calculation

Feedback compressor speed
calculation

Compressor speed control
output

FIG. 3

Refrigeration capacity acquisition module 401

First compressor rotational speed determination module 402

Evaporation temperature error data acquisition module 403

Second compressor rotational speed determination module 404

Target compressor rotational speed determination module 405

Compressor control module 406

FIG. 4

## INTERNATIONAL SEARCH REPORT

| | International application No. |
|---|---|
| | **PCT/CN2025/072877** |

**A. CLASSIFICATION OF SUBJECT MATTER**

B60H1/32(2006.01)i

According to International Patent Classification (IPC) or to both national classification and IPC

**B. FIELDS SEARCHED**

Minimum documentation searched (classification system followed by classification symbols)

IPC: B60H F04B

Documentation searched other than minimum documentation to the extent that such documents are included in the fields searched

Electronic data base consulted during the international search (name of data base and, where practicable, search terms used)

CNTXT, VEN, ENTXT, CJFD: 压缩机, 蒸发器, 误差, 目标, 实际, 温度, Compressor, Evaporator, Error, Target, Actual, Temperature

**C. DOCUMENTS CONSIDERED TO BE RELEVANT**

| Category* | Citation of document, with indication, where appropriate, of the relevant passages | Relevant to claim No. |
|---|---|---|
| PX | CN 117755050 A (CHONGQING CHANG'AN TECHNOLOGY CO., LTD.) 26 March 2024 (2024-03-26) claims 1-10, description, paragraphs 47-165, and figures 1-4 | 1-12 |
| X | CN 115653884 A (CHENGDU SERES TECHNOLOGY CO., LTD.) 31 January 2023 (2023-01-31) description, paragraphs 18-70, and figures 1-3 | 1-12 |
| X | CN 112060860 A (EVERGRANDE HENGCHI NEW ENERGY AUTOMOBILE RESEARCH INSTITUTE (SHANGHAI) CO., LTD.) 11 December 2020 (2020-12-11) description, paragraphs 37-97, and figures 1-3 | 1-12 |
| A | CN 110341438 A (CH-AUTO TECHNOLOGY CO., LTD.) 18 October 2019 (2019-10-18) entire document | 1-12 |
| A | CN 116729072 A (BEIQI FOTON MOTOR CO., LTD.) 12 September 2023 (2023-09-12) entire document | 1-12 |
| A | JP 2002089454 A (FUJI ELECTRIC CO., LTD.) 27 March 2002 (2002-03-27) entire document | 1-12 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 April 2025** | **05 May 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/072877**

| Patent document cited in search report | | | Publication date (day/month/year) | Patent family member(s) | Publication date (day/month/year) |
|---|---|---|---|---|---|
| CN | 117755050 | A | 26 March 2024 | None | |
| CN | 115653884 | A | 31 January 2023 | None | |
| CN | 112060860 | A | 11 December 2020 | None | |
| CN | 110341438 | A | 18 October 2019 | None | |
| CN | 116729072 | A | 12 September 2023 | None | |
| JP | 2002089454 | A | 27 March 2002 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202410099534